# EUROPÄISCHE PATENTSCHRIFT

(11) **EP 4 504 563 B1**
(45) Veröffentlichungstag und Bekanntmachung des Hinweises auf die Patenterteilung: **11.02.2026**
(21) Anmeldenummer: 23717905.6
(22) Anmeldetag: 05.04.2023
(51) Int. Cl.: B60R 13/02, F16B 5/04, F16B 5/12, F16B 13/12

(54) **SPREIZNIET**
RIVET
RIVETTE

(30) Priorität: 05.04.2022 DE 102022108167
(43) Veröffentlichungstag der Anmeldung: 12.02.2025
(73) Patentinhaber: LISI Automotive KKP GmbH & Co.KG, 97638 Mellrichstadt (DE)
(72) Erfinder: GLUTH, Patrick, 97638 Mellrichstadt (DE); STRAUB, Daniel, 97638 Mellrichstadt (DE)
(74) Vertreter: Habermann Intellectual Property Partnerschaft von Patentanwälten mbB
(86) Internationale Anmeldenummer: PCT/EP2023/059043
(87) Internationale Veröffentlichungsnummer: WO 2023/194494

(56) Entgegenhaltungen:
- EP-A1- 1 408 244
- EP-A1- 2 698 550
- WO-A1-2007/073821
- DE-U1- 29 509 726
- FR-A1- 2 308 821
- US-A1- 2005 008 445

## Beschreibung

Die Erfindung betrifft einen Spreizniet zum Verbinden von Bauteilen.

Neben dem Schweißen, dem Kleben und dem Verschrauben ist das Vernieten eines der wichtigsten technischen Verfahren zum Ausbilden von Verbindungen zwischen Bauteilen. Vernieten im Sinne der vorliegenden Erfindung bezeichnet das Ausbilden einer Verbindung mittels eines Niets, der in einer Montagerichtung durch einen zumindest zwei Bauteile durchdringenden Nietkanal hindurchgeführt ist und dessen Form während des Nietvorgangs so veränderbar ist, dass ein Randbereich des Nietkanals durch Teile des Niets derart hintergriffen ist, dass nach Durchführung des Nietvorgangs eine Verlagerung des Niets entgegen der Montagerichtung verhindert ist. Beim Nieten mit Metallnieten umfasst der Nietvorgang eine plastische Verformung des Niets, sodass eine nicht zerstörungsfrei lösbare Verbindung entsteht.

Neben den bereits seit langer Zeit bekannten Nietverfahren, die häufig auf der Verwendung von Metallnieten basieren, sind heutzutage auch Nietverfahren bekannt, bei denen Niete aus Kunststoff verwendet werden. Insbesondere im Fahrzeugbau werden sogenannte Spreizniete verwendet. Diese weisen einen Nietkörper auf, dessen Eigenschaften mittels eines Verriegelungselements so angepasst werden können, dass der Niet in oder an dem Nietkanal festlegbar ist. Üblich sind beispielsweise Spreizniete, die einen Verriegelungsstift aufweisen, mit dem ein Nietkörper aufgepilzt und/ oder verlagerbare Rastmittel gesperrt werden können, so dass der Niet verriegelt werden kann, wenn er bestimmungsgemäß durch den Nietkanal hindurchgeführt worden ist.

Bei der Serienfertigung moderner Maschinen, insbesondere im Kraftfahrzeugbau, ist die Optimierung von Herstellungsprozessen von herausragender Bedeutung, um mit einer möglichst hohen Kosteneffizienz produzieren zu können. Aufgrund der hohen Komplexität und des starken Integration verschiedenster Fahrzeugkomponenten, kommt es immer wieder dazu, dass Befestigungslösungen Optimierungsbedarf aufweisen, insbesondere weil es mit den markverfügbaren Lösungen nur unter verhältnismäßig großem Aufwand möglich ist, Bauteile aneinander festzulegen. So müssen insbesondere Schutzelemente, wie beispielsweise Steinschlagschütze, Schallschutzwannen, Unterfahrschütze und Ähnliches, so befestigt werden, dass ein Verbindungsbereich, in dem Bauteile aneinander festgelegt sind, nach einer Fertigstellung des Produkts, von außen nicht zugänglich ist, um ein ungewolltes Lösen der Verbindung zwischen den Bauteilen, beispielsweise durch Steinschlag, zu verhindern. Einige Varianten derartiger Spreizniete sind beispielsweise in den Druckschriften WO 2007/073821 A1, EP 1 408 244 A1 oder FR 2 308 821 A1 offenbart.

Um insbesondere bei dünnwandigen Konstruktionselementen ein Verwinden und übermäßiges Schwingen zu verhindern, werden diese in den angesprochenen Verbindungsbereichen häufig an zwei Festlegepunkten befestigt, die senkrecht zu einer lokalen Ausdehnung des Konstruktionselements in dem Verbindungsabschnitt voneinander beabstandet sind. In der Praxis hat sich gezeigt, dass einer dieser Festlegepunkte häufig relativ einfach zugänglich ist, wohingegen der andere Festlegepunkt von den aneinander festzulegenden Bauteilen verdeckt wird.

Im Fall der angesprochenen und aus dem Stand der Technik bekannten Spreiznieten bedeutet das, dass bei einer solchen Verbindung mit zwei Festlegepunkten einer der Spreizniete sehr einfach montiert werden kann, wohingegen der andere nur unter hohem Aufwand montierbar ist.

Aus DE 295 09 726 U1 ist ein Befestigungsanker gezeigt und beschrieben, mit welchem ein dünnwandiges Bauelement wie beispielsweise ein Fensterrahmen an einer Wand festgelegt und verankert werden kann. Der Befestigungsanker weist zu diesem Zweck zwei beabstandet zueinander angeordnete und jeweils radial aufweitbare Abschnitte eines Befestigungskörpers auf.

Als Aufgabe der vorliegenden Erfindung wird es daher angesehen, einen Spreizniet zur Verfügung zu stellen, mittels dessen die Bauteilmontage in Verbindungsabschnitten mit zumindest zwei senkrecht voneinander beabstandeten Festlegepunkten vereinfacht ist.

Diese Aufgabe wird erfindungsgemäß durch einen Spreizniet zum gleichzeitigen Ausbilden zumindest einer ersten Nietverbindung und einer zweiten Nietverbindung gelöst, wobei der Spreizniet in einer Montagerichtung durch einen der ersten Nietverbindung zuordenbaren ersten Nietkanal und einen der zweiten Nietverbindung zuordenbaren zweiten Nietkanal hindurchführbar ist, wobei der Spreizniet einen Nietkörper und einen Verriegelungsstift aufweist, wobei der Nietkörper eine Stiftaufnahmeöffnung und ein sich in der Montagerichtung von der Stiftaufnahmeöffnung weg erstreckendes Stiftaufnahmevolumen aufweist, dass zumindest abschnittsweise von einer Wandung des Nietkörpers umgriffen ist, wobei durch eine von dem Stiftaufnahmevolumen weg gerichtete und senkrecht zu der Montagerichtung ausgerichtete Außenfläche der Wandung ein Nenndurchmesser des Spreizniets definiert ist, wobei an dem Nietkörper zumindest ein erster Rastabschnitt und ein zweiter Rastabschnitt ausgebildet sind, wobei die Rastabschnitte in der Montagerichtung voneinander beabstandet sind, wobei der Nietkörper in den Rastabschnitten jeweils zumindest ein Rastmittel aufweist, das sich in radialer Richtung über die Außenfläche der Wandung hinaus erstreckt, sodass ein effektiver Durchmesser des Spreizniets im Bereich der Rastabschnitten größer ist, als der Nenndurchmesser und so in die Montagerichtung weisende Randbereiche der Nietkanäle durch die Rastmittel hintergreifbar sind, wobei die Rastmittel einen Anlagebereich mit zumindest einer in antiradialer Richtung weisenden Anlagefläche aufweisen, wobei die Rastmittel des Spreizniets so angeordnet und ausgerichtet sind, dass der Anlagebereich in einem lastfreien Zustand nicht in das Stiftaufnahmevolumen hineinragt, wobei die Rastmittel derart in antiradialer Richtung verlagerbar sind, dass die jeweiligen Anlagebereiche zumindest abschnittsweise in das Stiftaufnahmevolumen hinein verlagerbar sind, wenn auf die Rastmittel eine zumindest teilweise in antiradialer Richtung gerichtete Kraft wirkt, sodass der effektive Durchmesser des Spreizniets auf den Nenndurchmesser verringerbar ist und der Spreizniet durch die Nietkanäle hindurchführbar ist, wobei das Stiftaufnahmevolumen und der Verriegelungsstift so aneinander angepasst sind, dass der Verriegelungsstift derart in dem Stiftaufnahmevolumen anordnenbar ist, dass Verriegelungsabschnitte des Verriegelungsstifts so mit den Anlageflächen der Rastmittel in Anlage bringbar sind, dass eine Verlagerung der Rastmittel in das Stiftaufnahmevolumen hinein verhindert und so der Spreizniet an den Randbereichen der Nietkanäle festlegbar ist. Durch eine derartige Ausgestaltung des erfindungsgemäßen Spreizniets wird es ermöglicht, dass in zumindest zwei senkrecht voneinander beabstandeten Festlegepunkten gleichzeitig Nietverbindungen ausbildbar sind und die Bauteilmontage vereinfachbar ist. Besonders bevorzugt erfolgt das Einführen des Spreizniets von einer Oberseite der zu verbindenden Bauteile her, sodass eine korrekte Positionierung des Spreizniets durch die Schwerkraft unterstützt ist.

Bei einer vorteilhaften Umsetzung des Erfindungsgedankens ist es vorgesehen, dass der Nietkörper im Bereich der Stiftaufnahmeöffnungen einen Nietteller aufweist, der scheibenförmig ausgebildet ist und sich in radialer Richtung von der Außenfläche weg erstreckt. Es ist vorteilhafterweise vorgesehen, dass der Nietteller mit einem Randbereich des ersten Nietkanals in Anlage gebracht ist, wenn der Spreizniet bestimmungsgemäß durch den ersten Nietkanal und den zweiten Nietkanal hindurchgeführt und korrekt positioniert ist. Der Nietteller bildet damit ein Anschlagsmittel für den erfindungsgemäßen Spreizniet. Analog dazu ist es vorteilhafterweise ebenfalls vorgesehen, dass der Verriegelungsstift einen Stiftteller aufweisen kann, der so an dem Verriegelungsstift ausgebildet ist, dass er mit Nietteller in Anlage gebracht ist, wenn der Verriegelungsstift bestimmungsgemäß in dem Stiftaufnahmevolumen angeordnet ist.

Um den Spreizniet gegen Verlieren zu sichern, ist es auch möglich und erfindungsgemäß vorgesehen, dass der Spreizniet in einem dem Nietteller gegenüberliegenden Abschnitt ein Flügelelement aufweisen kann, das sich in einem lastfreien Zustand in radialer Richtung über den Nenndurchmesser hinaus erstreckt und das zumindest einen Flügel aufweist, der wie ein Widerhaken wirkt und durch den eine Verlagerung des Spreizniets entgegen der Montagerichtung verhindert ist. Hierdurch ist ein Herausziehen des Spreizniets aus den Nietkanälen verhinderbar. Durch ein solches Flügelelement ist das Risiko dafür, dass der Spreizniet aus den Nietkanälen herausrutscht, wenn die Rastmittel versagen sollten, verringert.

Besonders geeignet ist der erfindungsgemäße Spreizniet, um einen Steinschlagschutz an einem Querlenker eines Kraftfahrzeugs festzulegen.

Um eine besonders einfache Herstellung des erfindungsgemäßen Spreizniets zu ermöglichen, ist es bei einer vorteilhaften Umsetzung des Erfindungsgedankens vorgesehen, dass die Wandung des Nietkörpers zumindest abschnittsweise ein erstes Wandungsprofil mit einem ersten Armabschnitt und einem zweiten Armabschnitt sowie einem Stegabschnitt aufweist, wobei der Stegabschnitt sich zwischen einem ersten Stegendabschnitt, der einem ersten Oberflächenabschnitt der Außenfläche zuordenbar ist, und einem zweiten Stegendabschnitt, der einem zweiten Oberflächenabschnitt der Außenfläche zuordenbar ist und der dem ersten Oberflächenabschnitt der Außenfläche gegenüberliegt, erstreckt, wobei der Stegabschnitt das Stiftaufnahmevolumen zumindest abschnittsweise in ein erstes Teilvolumen und ein zweites Teilvolumen unterteilt, wobei sich der erste Armabschnitt, ausgehend von dem ersten Stegendabschnitt, in einer Umfangsrichtung eines Umkreises des Nietkörpers, entlang der Außenfläche sowie in das erste Teilvolumen hinein erstreckt, wobei sich der zweite Armabschnitt, ausgehend von dem zweiten Stegendabschnitt, in der Umfangsrichtung, entlang der Außenfläche sowie in das zweite Teilvolumen hinein erstreckt. Durch eine derartige Ausgestaltung der Wandung erhält der Nietkörper eine besonders hohe Stabilität und Flexibilität, bei gleichzeitig verhältnismäßig geringem Materialeinsatz.

Es ist vorteilhafterweise vorgesehen, dass der Nietkörper im Bereich der Stiftaufnahmeöffnung zylindrisch ausgebildet ist. Hierdurch ist das Einführen des Verriegelungsstifts erleichtert, da die Gefahr dafür, dass er beim Einführen mit einer Spitze in einer in die Wandung eingebrachte Struktur "hängen bleibt" und/ oder verkantet, verringert ist.

Es ist weiterhin möglich und erfindungsgemäß vorgesehen, dass in die Wandung Verstärkungsstrukturen, wie insbesondere Rippen, eingebracht sein können, um eine Biegesteifigkeit und/ oder einen Verformungswiderstand des Nietkörpers zu erhöhen. Dies gilt analog auch für den Verriegelungsstift.

Bei einer vorteilhaften Umsetzung des Erfindungsgedankens ist es vorgesehen, dass die Wandung des Nietkörpers zumindest abschnittsweise ein zweites Wandungsprofil mit einem dritten Armabschnitt und einem vierten Armabschnitt sowie dem Stegabschnitt aufweist, wobei sich der dritte Armabschnitt, ausgehend dem ersten Stegendabschnitt, entgegen der Umfangsrichtung des Umkreises des Nietkörpers, entlang der Außenfläche sowie in das zweite Teilvolumen hinein erstreckt, wobei sich der vierte Armabschnitt, ausgehend von dem zweiten Stegendabschnitt, entgegen der Umfangsrichtung, entlang der Außenfläche sowie in das erste Teilvolumen hinein erstreckt. Das zweite Wandungsprofil umläuft die Teilvolumina zumindest abschnittsweise in entgegengesetzter Richtung zu dem ersten Wandungsprofil. Dabei ist es vorteilhafterweise vorgesehen, dass das erste Wandungsprofil und das zweite Wandungsprofil in Übergangsbereichen ineinander übergehen.

Es ist vorteilhafterweise ebenfalls vorgesehen, dass der Nietkörper entlang seines Verlaufs in der Montagerichtung abwechselnd mehrere Abschnitte mit dem ersten Wandungsprofil und mit dem zweiten Wandungsprofil aufweisen kann. Hierdurch ist die Stabilität des Nietkörpers bei minimalem Materialeinsatz maximierbar.

Um ein möglichst einfaches Einbringen des Verriegelungsstifts in die Teilvolumina zu ermöglichen, ist es vorteilhafterweise vorgesehen, dass eine Projektion des ersten Teilvolumens in eine senkrecht zu der Montagerichtung ausgerichtete Projektionsebene von einer Projektion einer an das erste Teilvolumen angrenzenden ersten Innenkante des ersten Armabschnitts, einer Projektion einer dritten Innenkante des dritten Armabschnitts sowie einer Projektion einer ersten Stegkante des Stegabschnitts, die an das erste Teilvolumen grenzt, vollständig umlaufen ist, sodass durch die erste Innenkante, die dritte Innenkante und die erste Stegkante ein erstes Teilvolumenprofil des ersten Teilvolumens definiert ist, wobei eine Projektion des zweiten Teilvolumens in der Projektionsebene von einer Projektion einer an das zweite Teilvolumen angrenzenden zweiten Innenkante des zweiten Armabschnitts, einer Projektion einer vierten Innenkante des vierten Armabschnitts sowie einer Projektion einer zweiten Stegkante des Stegabschnitts, die an das zweite Teilvolumen grenzt, vollständig umlaufen ist, sodass durch die zweite Innenkante, die vierte Innenkante und die zweite Stegkante ein zweites Teilvolumenprofil des zweiten Teilvolumens definiert ist. Durch eine derartige Ausgestaltung des erfindungsgemäßen Spreizniets wird erreicht, dass die Teilvolumina von Wandungen umlaufen sind, die eine minimale Anzahl an Absätzen und Stufen aufweisen.

Bei einer weiteren vorteilhaften Umsetzung des Erfindungsgedankens ist es vorgesehen, dass der erste Armabschnitt und der zweite Armabschnitt und/oder der dritte Armabschnitt und der vierte Armabschnitt punktsymmetrisch zueinander ausgebildet sind. Hierdurch wird erreicht, dass auch das erste Teilvolumen und das zweite Teilvolumen eine Symmetrie aufweisen. Hierdurch ist das Risiko dafür, dass unter Belastung innerhalb des Nietkörpers einseitig Spannungsspitzen auftreten, verringert. Besonders bevorzugt sind die Armabschnitte so aneinander angepasst, dass das erste und das zweite Teilvolumen eine Querschnittsfläche aufweisen, die näherungsweise einem Rechteck oder Quadrat mit abgerundeten Ecken entspricht. Die grundsätzlich eckige Form fungiert vorteilhafterweise als Verdrehsicherung und stabilisiert denjenigen Abschnitt des Verriegelungsstifts, der in eines der Teilvolumina eingeführt ist. Durch die abgerundeten Ecken ist das Risiko dafür, dass unter Last Spannungsspitzen auftreten, verringert.

Um eine besonders effiziente Herstellung des erfindungsgemäßen Spreizniets, mittels eines urformenden Herstellungsverfahrens, zu ermöglichen, insbesondere mittels Spritzgießens, ist es vorteilhafterweise vorgesehen, dass die Wandung des Nietkörper im Bereich der Wandungsprofile in parallel zu dem Stegabschnitt und senkrecht zu der Montagerichtung ausgerichteten Werkzeugrichtungen hinterschneidungsfrei ausgebildet ist. Hinterschneidungen im Sinne der vorliegenden Erfindung sind Konstruktionselemente, die frei an einem Gussteil hervorstehen und damit verhindern können, dass sich dieses aus einer Gussform entfernen lässt.

Es ist vorteilhafterweise vorgesehen, dass der Nietkörper nicht vollständig hinterschneidungsfrei ausgeführt sein muss. So kann der Nietkörper beispielsweise im Bereich der Stifteinführöffnung zylindrisch ausgebildet sein. Es ist vorgesehen, dass solche Bereiche des Nietkörpers unter Verwendung eines Schiebers herstellbar sind. Schieber sind Maschinenelemente, die im Bereich des Formenbaus verwendet werden, um Hinterschneidungen in Gussteile einbringen zu können.

Hinterschneidungsfreiheit setzt voraus, dass ein Werkstück eine Teilungsebene aufweist, an der die Gussform nach einem Gussvorgang geteilt wird, um das gegossene Werkstück auszuwerfen. Bei dem erfindungsgemäßen Spreizniet ist es vorteilhafterweise vorgesehen, dass diese Teilungsebene durch eine parallel zu der Montagerichtung ausgerichtete und durch einen Mittelpunkt des Umkreises des Nietkörpers verlaufende Mittelachse verläuft sowie senkrecht zu dem Stegabschnitt ausgerichtet ist.

Damit weitere Konstruktionselemente, wie beispielsweise die Rastmittel, ebenfalls hinterschneidungsfrei ausgebildet sein können, ist es vorteilhafterweise vorgesehen, dass alle Abschnitte dieser Konstruktionselemente senkrecht zu der Teilungsebene ausgerichtet sind.

Bei einer vorteilhaften Ausgestaltung des erfindungsgemäßen Spreizniets ist es vorgesehen, dass die Wandung einen durch den Stegabschnitt des Wandungsprofils bestimmten Quersteg aufweist, der sich durch das Stiftaufnahmevolumen erstreckt und das Stiftaufnahmevolumen in das erste Teilvolumen und das zweite Teilvolumen unterteilt, wobei der Verriegelungsstift eine Stegausnehmung aufweist, die den Verriegelungsstift abschnittsweise spaltet, sodass der Verriegelungsstift eine erste Verriegelungszunge und eine zweite Verriegelungszunge aufweist, wobei die Verriegelungszungen und der Quersteg derart aneinander angepasst sind, dass die erste Verriegelungszunge in das erste Teilvolumen einführbar ist, wobei die zweite Verriegelungszunge in das zweite Teilvolumen einführbar ist, wobei die Verriegelungszungen zumindest abschnittsweise an dem Quersteg anliegen und wobei die Verriegelungszungen die Verriegelungsabschnitte des Verriegelungsstifts aufweisen. Durch eine derartige Ausgestaltung des Spreizniets werden zwei Dinge erreicht. Zum einen kann der Spreizniet in den Bereichen, über die sich der Quersteg erstreckt, hinterschneidungsfrei ausgeführt werden, da der Quersteg den Nietkörper stabilisiert, indem durch ihn ein Flächenträgheitsmoment des Nietkörpers für Biegungen und Torsionen um die Mittelachse erhöht ist. Zum anderen ist der Verriegelungsstift durch den Quersteg verdrehsicher in dem Stiftaufnahmevolumen anordnenbar. Eine verdrehsichere Anordnung des Verriegelungsstifts ist insbesondere sinnvoll, um einen Verschleiß des Spreizniets zu verringern und seine Dauerhaltbarkeit zu erhöhen.

Um den erfindungsgemäßen Spreizniet besonders günstig herstellen zu können, ist es vorteilhafterweise vorgesehen, dass der Spreizniet einen einstückig hergestellten Nietkörper aufweist. Besonders bevorzugt ist der Nietkörper mittels eines Spritzgussverfahrens hergestellt.

Um den Spreizniet vormontieren zu können und so die Zeit für seine Montage zu verkürzen, ist es vorteilhafterweise vorgesehen, dass der Verriegelungsstift einen ersten Verriegelungsabschnitt, eine Ausklinkung, einen zweiten Verriegelungsabschnitt sowie Vormontagerastmittel aufweist, wobei die Ausklinkung sich in der Montagerichtung zwischen dem ersten Verriegelungsabschnitt und dem zweiten Verriegelungsabschnitt erstreckt, wobei eine Ausdehnung des Verriegelungsstifts quer zu der Montagerichtung im Bereich der Ausklinkung geringer ist, als im Bereich der Verriegelungsabschnitte, sodass durch die Ausklinkung eine Verlagerung der Rastmittel in das Stiftaufnahmevolumen hinein ermöglicht ist, wobei der Verriegelungsstift in einem Vormontagezustand des Spreizniets mittels der Vormontagerastmittel so in dem Stiftaufnahmevolumen festgelegt ist, dass der erste Verriegelungsabschnitt des Verriegelungsstifts an dem ersten Rastabschnitt vorbeigeführt und die Ausklinkung im Bereich des ersten Rastabschnitts angeordnet ist, sodass die Rastmittel des ersten Rastabschnitts und des zweiten Rastabschnitts entriegelt sind, wobei der Spreizniet durch ein vollständiges Einschieben des Verriegelungsstifts in das Stiftaufnahmevolumen in einen Montagezustand überführbar ist, in dem der erste Verriegelungsabschnitt des Verriegelungsstifts im Bereich des zweiten Rastabschnitts angeordnet ist, wobei der zweite Verriegelungsabschnitt im Bereich des ersten Rastabschnitts angeordnet ist, wobei die Ausklinkung zwischen dem ersten Rastabschnitt und dem zweiten Rastabschnitt angeordnet ist, sodass die Verriegelungsabschnitte in dem Montagezustand mit den Anlageflächen der Rastmittel im ersten und zweiten Rastabschnitt in Anlage gebracht sind und der Spreizniet verriegelt ist. Es ist vorteilhafterweise vorgesehen, dass der in den Vormontagezustand überführte Spreizniet durch die Nietkanäle hindurchführbar ist, wobei die Rastmittel bereits in dem Vormontagezustand die Randbereiche der Nietkanäle hintergreifen. In dem Vormontagezustand ist ein Entnehmen des Spreizniets möglich, indem eine von den Rastmitteln ausgeübte Haltekraft überwunden wird, sodass die Rastmittel in das Stiftaufnahmevolumen hinein verlagert werden. Sobald der Spreizniet in die Montagezustand überführt ist, ist ein zerstörungsfreies Entnehmen des Spreizniets aus den Nietkanälen durch die Rastmittel verhindert. Zum zerstörungsfreien Entnehmen des Spreizniets muss der Spreizniet zumindest in den Vormontagezustand überführt werden.

Bei einer vorteilhaften Umsetzung des Erfindungsgedankens ist es vorgesehen, dass die Rastmittel als in die Wandung eingebrachte Rastzungen ausgebildet sind, wobei die Rastzungen rampenartig ausgebildete Rastfüße aufweisen, die sich in antiradialer Richtung von dem Nietkörper weg erstrecken und durch die die Randbereiche der Nietkanäle hintergreifbar sind. Dabei ist es vorgesehen, dass die Rastzungen integral mit dem Nietkörper ausgebildet sein können, beispielsweise indem sie bereits bei der Herstellung des Nietkörpers aus- oder angeformt werden. Besonders bevorzugt werden die Rastzungen mittels eines Spritzgussverfahrens zusammen mit dem Nietkörper ausgebildet.

Es ist auch möglich und erfindungsgemäß vorgesehen, dass die Rastzungen als eigenständiges Bauteil ausgebildet sein können. Sie können beispielsweise aus einem metallischen Werkstoff hergestellt sein. Besonders bevorzugt sind die Rastzungen als Laschen ausgebildet, die sich, ausgehend von einem Tragring, der den Nietkörper umgreift, in der Montagerichtung entlang des Nietkörpers erstrecken.

Um eine Sicherung des erfindungsgemäßen Spreizniets gegen eine ungewollte Verlagerung entgegen der Montagerichtung zu verbessern, ist es bei einer vorteilhaften Umsetzung des Erfindungsgedankens vorgesehen, dass an dem Nietkörper Hilfsrastmittel ausgebildet sind, wobei die Hilfsrastmittel unabhängig von den Rastmittel sind und wobei die Hilfsrastmittel so an die Nietkanäle angepasst sind, dass sie in Innenwandungsbereiche der Nietkanäle eingreifen, wenn der Spreizniet bestimmungsgemäß in den Nietkanälen positioniert ist, sodass der Spreizniet mittels der Hilfsrastmittel auch dann an den Nietkanälen festgelegt ist, wenn er nicht in den Montagezustand überführt ist. Durch eine derartige Ausgestaltung des erfindungsgemäßen Spreizniets ist das Risiko dafür, dass der Spreizniet entgegen der Montagerichtung aus zumindest einem der Nietkanäle herausverlagert wird, verringert. Die Hilfsrastmittel üben auf den Spreizniet auch dann eine Haltekraft aus, wenn die Rastmittel nicht ordnungsgemäß funktionieren sollten.

Hierdurch ist die Betriebssicherheit bei Verwendung des erfindungsgemäßen Spreizniets erhöht.

Bei einer besonders vorteilhaften Umsetzung des Erfindungsgedankens ist es vorgesehen, dass die Hilfsrastmittel als Lamellen ausgebildet sind, die den Nietkörper entlang der Außenfläche und Senkrecht zu der Montagerichtung umlaufen.

Die Erfindung betrifft auch ein Verfahren zur Herstellung eines der zuvor beschriebenen Spreizniete, wobei zunächst in einem Nietherstellungsschritt der Nietkörper hergestellt wird, wobei in einem auf den Nietherstellungsschritt folgenden Stiftherstellungsschritt der Verriegelungsstift hergestellt wird, wobei in einem auf den Nietherstellungsschritt und den Stiftherstellungsschritt folgenden Vorpositionierungsschritt der Verriegelungsstift abschnittsweise so in den Nietkörper eingeführt und an diesem festgelegt wird, dass der Spreizniet nicht verriegelt ist und der Verriegelungsstift verliersicher an dem Nietkörper festgelegt ist. Besonders bevorzugt kommen in dem Nietherstellungsschritt und/ oder dem Stiftherstellungsschritt urformende Fertigungsverfahren, insbesondere Spritzgießen, zur Anwendung. Darüber hinaus ist es auch möglich, dass alternative Verfahren zur Herstellung des Spreizniets verwendet werden, beispielsweise 3D-Drucken, Lasersintern oder Ähnliches.

Bei einer besonders vorteilhaften Umsetzung des erfindungsgemäßen Verfahrens ist es vorgesehen, dass der Stiftherstellungsschritt und der Nietherstellungsschritt gleichzeitig, mittels eines Werkzeugs durchgeführt werden, wobei in einem auf den Stiftherstellungsschritt und den Nietherstellungsschritt folgenden Teilauswurfschritt der Nietkörper und der Verriegelungsstift aus dem Werkzeug gelöst werden, wobei der Vorpositionierungsschritt nach dem Teilauswurfschritt mit dem gleichen Werkzeug durchgeführt wird, wie der Stiftherstellungsschritt und der Nietherstellungsschritt, indem der Verriegelungsstift mittels eines einzelnen Schiebers in den Nietkörper eingeschoben wird, wobei in einem Auswurfschritt der fertige Spreizniet mit dem Nietkörper und dem korrekt vorpositionierten Verriegelungsstift ausgeworfen wird. Besonders bevorzugt ist der Nietkörper dabei bis auf einen zylindrischen Abschnitt im Bereich der Stiftaufnahmeöffnung hinterschneidungsfrei ausgebildet.

Weitere vorteilhafte Ausgestaltungen der Erfindung werden anhand von in den Figuren der Zeichnung dargestellten Ausführungsbeispielen erläutert. Es zeigen:
Figuren 1A und 1B schematisch dargestellte Schnittansichten einer Ausführungsform des erfindungsgemäßen Spreizniets,
Figuren 2A bis 2C schematisch dargestellte Schnittansichten des Nietkörpers des Spreizniets aus den Figuren 1A und 1B,
Figur 3 eine schematische Darstellung von Projektionen der Teilvolumina,
Figur 4 eine schematisch dargestellte Schnittansicht des Verriegelungsstifts des Spreizniets aus den Figuren 1A und 1B,
Figuren 5A und 5B schematisch dargestellte Schnittansichten einer Ausführungsform des Spreizniets in einer Einbausituation und
Figuren 6 und 7 schematisch dargestellte Verfahren zur Herstellung des Spreizniets.

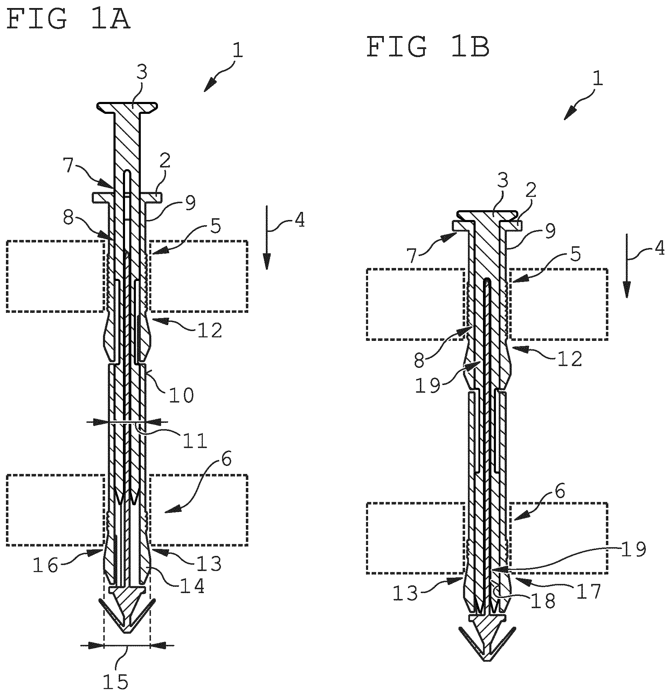

In den Figuren 1A und 1B ist eine schematisch dargestellte Schnittansicht eines Spreizniets 1 gezeigt. Der Spreizniet 1 weist einen Nietkörper 2 und einen Verriegelungsstift 3 auf. Der Spreizniet 1 ist in einer Montagerichtung 4 durch einen ersten Nietkanal 5 und einen zweiten Nietkanal 6 hindurchgeführt.

Der Nietkörper 2 weist eine Stiftaufnahmeöffnung 7 und ein sich in der Montagerichtung 4 von der Stiftaufnahmeöffnung 7 weg erstreckendes Stiftaufnahmevolumen 8 auf. Das Stiftaufnahmevolumen 8 ist abschnittsweise von einer Wandung 9 des Nietkörpers 2 umgriffen. Durch eine von dem Stiftaufnahmevolumen 8 weg gerichtete und senkrecht zu der Montagerichtung 4 ausgerichtete Außenfläche 10 der Wandung 9 ist ein Nenndurchmesser 11 des Spreizniets 1 definiert. Die Außenfläche 10 und der Nenndurchmesser 11 sind lediglich Figur 1A dargestellt und bezeichnet.

An dem Nietkörper 2 sind ein erster Rastabschnitt 12 und ein zweiter Rastabschnitt 13 ausgebildet. Die Rastabschnitte 12, 13 sind in der Montagerichtung 4 voneinander beabstandet.

Der Nietkörper 2 weist in den Rastabschnitten jeweils zwei Rastmittel 14 auf, von denen in den Figuren 1A und 1B lediglich eines bezeichnet ist. Die Rastmittel 14 erstrecken sich in radialer Richtung (weder dargestellt, noch bezeichnet) über die Außenfläche 10 der Wandung 9 hinaus. Dadurch ist ein effektiver Durchmesser 15 des Spreizniets 1 im Bereich der Rastabschnitte 12, 13 größer als der Nenndurchmesser 11. Aufgrund dieses Unterschieds zwischen dem effektiven Durchmesser 15 und dem Nenndurchmesser 11 sind in die Montagerichtung 4 weisende Randbereiche 16 der Nietkanäle 5, 6 durch die Rastmittel 14 hintergriffen (lediglich in Figur 1A beispielhaft bezeichnet).

Die Rastmittel 14 des in den Figuren 1A und 1B gezeigten Spreizniets 1 weisen jeweils einen Anlagebereich 17 mit einer in antiradialer Richtung weisenden Anlagefläche 18 auf. Der Anlagebereich 17 und die Anlagefläche 18 sind lediglich in Figur 1B beispielhaft bezeichnet. Wie in den Figuren 1A und 1B dargestellt, sind die Rastmitteln 14 des Spreizniets 1 so angeordnet und ausgerichtet, dass der Anlagebereich 17 in einem lastfreien Zustand, in dem der Spreizniet 1 in den Figuren 1A und 1B dargestellt ist, nicht in das Stiftaufnahmevolumen 8 hineinragt. Wie in Figur 1A gut erkennbar ist, sind die Rastmittel 14 derart in antiradialer Richtung verlagerbar, dass die jeweiligen Anlagebereich 17 abschnittsweise in das Stiftaufnahmevolumen 8 hinein verlagerbar sind.

Der Verriegelungsstift 3 weist zwei Verriegelungsabschnitte 19 auf, die lediglich in Figur 1B bezeichnet sind. Die Verriegelungsabschnitte 19 des, wie in Figur 1B gezeigt, in das Stiftaufnahmevolumen 8 eingeführten Verriegelungsstifts 3 sind mit den Anlageflächen 18 der Rastmittel 14 in Anlage gebracht. Hierdurch ist eine Verlagerung der Rastmittel 14 in das Stiftaufnahmevolumen 8 hinein verhindert und so der Spreizniet 1 an den Nietkanälen 5, 6 festgelegt.

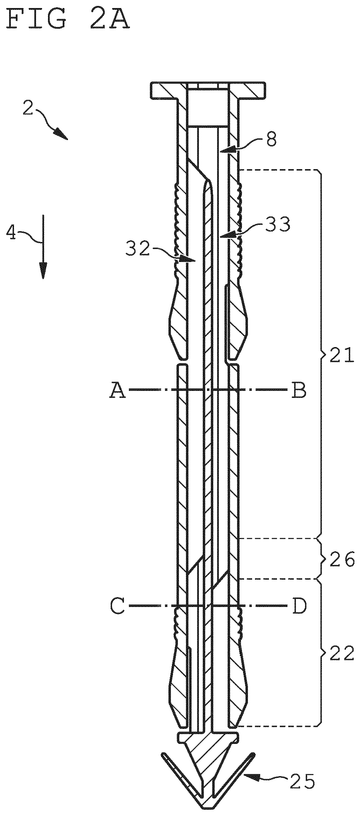

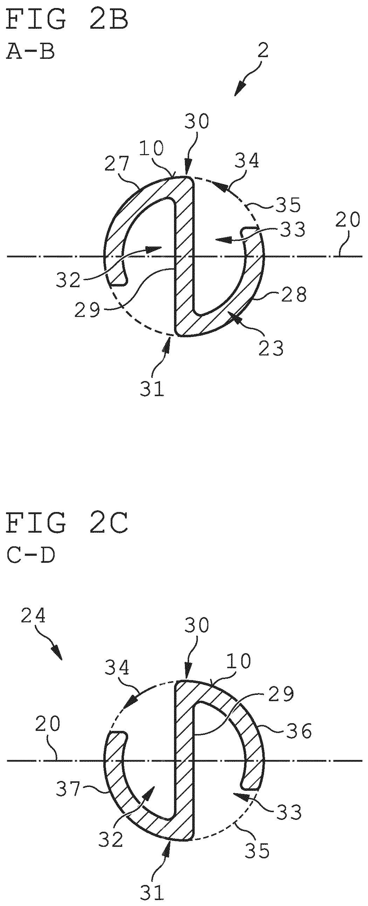

In den Figuren 2A bis 2C sind schematisch dargestellte Schnittansichten des in den Nietkörpers 2 des in den Figuren 1A und 1B dargestellten Spreizniets 1 gezeigt. In Figur 2A ist der Nietkörper 2 in einer parallel zu der Montagerichtung 4 ausgerichteten Teilungsebene 20 (lediglich in Figur 2B dargestellt und bezeichnet) geschnitten dargestellt. In Figur 2B ist der Schnitt A-B und in Figur 2C ist der Schnitt C-D dargestellt.

Der in den Figuren 2A bis 2C gezeigte Nietkörper 2 weist einen ersten Längsabschnitt 21 und einen zweiten Längsabschnitt 22 auf, wobei der erste Längsabschnitt 21 ein erstes Wandungsprofil 23 (dargestellt in Figur 2B) und der zweite Längsabschnitt 22 ein zweites Wandungsprofil 24 (dargestellt in Figur 2C) aufweist. Der Nietkörper 2 weist auch ein Flügelelement 25 und einen Übergangsabschnitt 26 auf. Der erste Längsabschnitt 21, der zweite Längsabschnitt 22, der zwischen den Längsabschnitten 21, 22 ausgebildete Übergangsabschnitt 26 und das Flügelelement 25 sind hinterschneidungsfrei in Bezug auf die Teilungsebene 20 ausgebildet.

Das in Figur 2B dargestellte erste Wandungsprofil 23 weist einen ersten Armabschnitt 27, einen zweiten Armabschnitt 28 sowie einen Stegabschnitt 29 auf. Der Stegabschnitt 29 erstreckt sich zwischen einem ersten Stegendabschnitt 30 einem zweiten Stegendabschnitt 31 und unterteilt das Stiftaufnahmevolumen 8 in ein erstes Teilvolumen 32 und ein zweites Teilvolumen 33.

Der erste Armabschnitt 27 erstreckt sich, ausgehend von dem ersten Stegendabschnitt 30, in einer Umfangsrichtung 34 eines Umkreises 35 des Nietkörpers 2, entlang der Außenfläche 10 sowie in das erste Teilvolumen 32 hinein. Demgegenüber erstreckt sich der zweite Armabschnitt 28, ausgehend von dem zweiten Stegendabschnitt 31, in der Umfangsrichtung 34, entlang der Außenfläche 10 sowie in das zweite Teilvolumen 33 hinein.

Das in Figur 2C dargestellte zweite Wandungsprofil 24 weist einen dritten Armabschnitt 36, einen vierten Armabschnitt 37 sowie den Stegabschnitt 29 auf. Der dritte Armabschnitt 36 erstreckt sich, ausgehend von dem ersten Stegendabschnitt 30, entgegen der Umfangsrichtung 34 des Umkreises 35, entlang der Außenfläche 10 sowie in das zweite Teilvolumen 33 hinein. Der vierte Armabschnitt 37 erstreckt sich, ausgehend von dem zweiten Stegendabschnitt 31, entgegen der Umfangsrichtung 34, entlang der Außenfläche 10 sowie in das erste Teilvolumen 32 hinein.

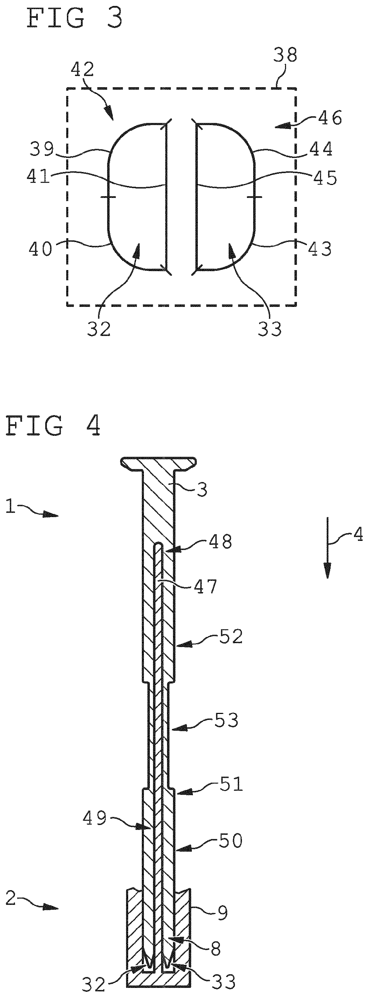

In Figur 3 ist eine schematische Darstellung von Projektionen der Teilvolumina 32, 33 auf eine senkrecht zu der Montagerichtung (weder dargestellt, noch bezeichnet) ausgerichtete Projektionsebene 38 gezeigt. Das erste Teilvolumen 32 ist von einer Projektion einer an das erste Teilvolumen 32 angrenzenden ersten Innenkante 39 des ersten Armabschnitts, einer Projektion einer dritten Innenkante 40 des dritten Armabschnitts sowie einer Projektion einer ersten Stegkante 41 des Stegabschnitts, die an das erste Teilvolumen 32 grenzt, vollständig umlaufen. Durch die Kanten 39, 40, 41 ist ein erstes Teilvolumenprofil 42 des ersten Teilvolumens 32 definiert. Eine Projektion des zweiten Teilvolumens 33 in der Projektionsebene 38 ist von einer Projektion einer an das zweite Teilvolumen 33 angrenzenden zweiten Innenkante 43 des zweiten Armabschnitts, einer Projektion einer vierten Innenkante 44 des vierten Armabschnitts sowie einer Projektion einer zweiten Stegkante 45 des Stegabschnitts vollständig umlaufen. Durch die Kanten 43 ,44, 45 ist ein zweites Teilvolumenprofil 46 des zweiten Teilvolumens 33 definiert.

In Figur 4 ist eine ausschnittsweise und schematisch dargestellte Schnittansicht eines Spreizniets 1 gezeigt. Der Nietkörper 2 ist lediglich teilweise dargestellt.

Die Wandung 9 weist einen durch den Stegabschnitt des Wandungsprofils bestimmten Quersteg 47 auf. Der Quersteg erstreckt sich durch das Stiftaufnahmevolumen 8 und teilt es in das erste Teilvolumen 32 und das zweite Teilvolumen 33. Der Verriegelungsstift 3 weist eine Stegausnehmung 48 auf, die den Verriegelungsstift 3 abschnittsweise spaltet. Der so gespaltene Verriegelungsstift 3 weist eine erste Verriegelungszunge 49 und eine zweite Verriegelungszunge 50 auf. Die erste Verriegelungszunge 49 ist in das erste Teilvolumen 32 eingeführt und die zweite Verriegelungszunge 50 ist in das zweite Teilvolumen 33 eingeführt. Die Verriegelungszungen 49, 50 liegen abschnittsweise an dem Quersteg 47 an. Auf den Verriegelungszungen 49, 50 des Verriegelungsstifts 3 sind ein erster Verriegelungsabschnitt 51 und ein zweiter Verriegelungsabschnitt 52 ausgebildet.

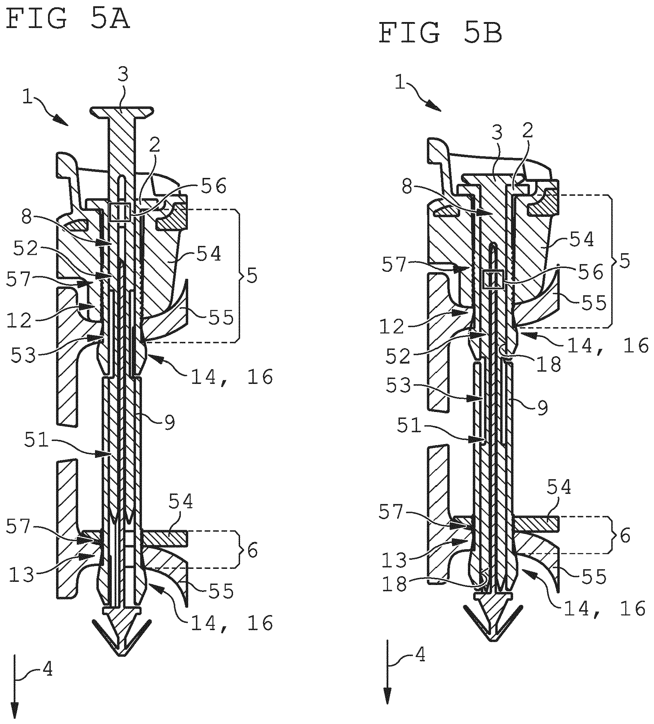

Zwischen dem ersten Verriegelungsabschnitt 51 und dem zweiten Verriegelungsabschnitt 52 ist bei dem in Figur 4 gezeigten Verriegelungsstift 3 eine Ausklinkung 53 ausgebildet. Im Bereich der Ausklinkung 53 ist eine Ausdehnung des Verriegelungsstifts 3 quer zu der Montagerichtung 4 im geringer, als im Bereich des ersten und zweiten Verriegelungsabschnitts 51, 52. Die Funktionsweise des in Figur 4 gezeigten Verriegelungsstifts 3, insbesondere die Funktionsweise der Ausklinkung 53 ist in den nachfolgenden Figuren 5A und 5B gezeigt.

In den Figuren 5A und 5B sind schematisch dargestellte Schnittansichten einer Ausführungsform des Spreizniets 1 in einer Einbausituation gezeigt. Der Spreizniet 1 ist durch den ersten Nietkanal 5 und den zweiten Nietkanal 6 hindurchgeführt. Der erste Nietkanal 5 und der zweite Nietkanal 6 erstrecken sich jeweils durch ein erstes Bauteil 54 und ein zweites Bauteil 55. Die Rastmittel 14 sind jeweils durch die Nietkanäle 14 hindurchgeführt und mit den jeweiligen Randbereichen 16 der Nietkanäle 5, 6 in Anlage gebracht. Der Verriegelungsstift 3 weist lediglich schematisch dargestellte Vormontagerastmittel 56 auf. Mittels der Vormontagerastmittel 56 ist der Verriegelungsstift 3 in einem in Figur 5A gezeigten Vormontagezustand des Spreizniets 1 so in dem Stiftaufnahmevolumen 8 festgelegt, dass der erste Verriegelungsabschnitt 51 des Verriegelungsstifts 3 an dem ersten Rastabschnitt 12 vorbeigeführt und die Ausklinkung 53 im Bereich des ersten Rastabschnitts 12 angeordnet ist, sodass die Rastmittel 14 des ersten Rastabschnitts 12 und des zweiten Rastabschnitts 13 entriegelt sind. Die Vormontagerastmittel 56 dienen auch als Verlier- und Transportsicherung.

Der in den Figuren 5A und 5B gezeigte Spreizniet 1 ist in dem Vormontagezustand durch die Nietkanäle 5, 6 hindurchgeführt worden. Durch die Ausklinkung 53 ist dabei eine Verlagerung der in dem ersten Rastabschnitt 12 angeordneten Rastmittel 14 in das Stiftaufnahmevolumen 8 hinein ermöglicht.

In den Rastabschnitten 12, 13 sind schematisch dargestellte Hilfsrastmittel 57 ausgebildet sind. Die Hilfsrastmittel 57 sind von den Rastmitteln 14 unabhängig. Sie sind so an die Nietkanäle 5, 6 angepasst, dass sie in Innenwandungsbereiche (nicht bezeichnet) der Nietkanäle 12,13 eingreifen.

In Figur 5B ist der Spreizniet 1 in einem Montagezustand gezeigt, in dem der Verriegelungsstift 3 vollständig in das Stiftaufnahmevolumen 8 eingeschoben ist. In dem Montagezustand ist der erste Verriegelungsabschnitt 51 des Verriegelungsstifts 3 im Bereich des zweiten Rastabschnitts 13 angeordnet. Der zweite Verriegelungsabschnitt 52 ist im Bereich des ersten Rastabschnitts 12 angeordnet. Die Ausklinkung 53 ist in dem Montagezustand zwischen dem ersten Rastabschnitt 12 und dem zweiten Rastabschnitt 13 angeordnet. Der erste und zweite Verriegelungsabschnitt 51, 52 sind in dem Montagezustand mit den Anlageflächen 18 der Rastmittel 14 im ersten und zweiten Rastabschnitt 12, 13 in Anlage gebracht. In dem Montagezustand ist eine Verlagerung der Rastmittel 14 in das Stiftaufnahmevolumen 8 hinein durch den Verriegelungsstift 3 verhindert, sodass der Spreizniet 1 verriegelt ist.

Bei dem in den Figuren 5A und 5B gezeigten Spreizniet 1 sind die Rastmittel 14 als in die Wandung 9 des Nietkörpers 2 eingebrachte Rastzungen mit rampenartig ausgebildeten Rastfüßen ausgebildet.

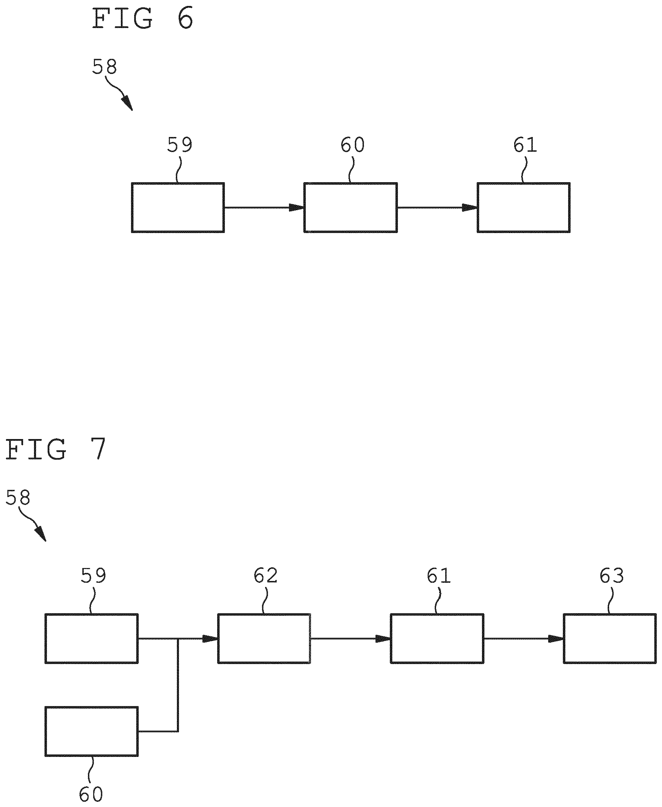

In Figur 6 ist schematisch ein Verfahren 58 zur Herstellung eines eines erfindungsgemäßen Spreizniets gezeigt. Bei dem Verfahren 58 wird zunächst in einem Nietherstellungsschritt 59 der Nietkörper hergestellt. In einem auf den Nietherstellungsschritt 59 folgenden Stiftherstellungsschritt 60 wird der Verriegelungsstift hergestellt. In einem auf den Nietherstellungsschritt 59 und den Stiftherstellungsschritt 60 folgenden Vorpositionierungsschritt 61 wird der Verriegelungsstift abschnittsweise so in den Nietkörper eingeführt, dass der Spreizniet in den Vormontagezustand gebracht und der Verriegelungsstift verliersicher an dem Nietkörper festgelegt ist.

In Figur 7 ist eine alternative Ausführungsform des Verfahrens 58 gezeigt. Der Stiftherstellungsschritt 59 und der Nietherstellungsschritt 60 werden gleichzeitig und mittels eines Werkzeugs durchgeführt. In einem auf den Stiftherstellungsschritt 59 und den Nietherstellungsschritt 60 folgenden Teilauswurfschritt 62 werden der Nietkörper und der Verriegelungsstift aus dem Werkzeug gelöst. Der Vorpositionierungsschritt 61 wird nach dem Teilauswurfschritt 62 mit dem gleichen Werkzeug durchgeführt, wie der Stiftherstellungsschritt 59 und der Nietherstellungsschritt 60, indem der Verriegelungsstift mittels eines einzelnen Schiebers in den Nietkörper eingeschoben wird. In einem abschließenden Auswurfschritt 63 wird der fertige Spreizniet mit dem Nietkörper und dem korrekt vorpositionierten Verriegelungsstift ausgeworfen.

### BEZUGSZEICHENLISTE

- 1.: Spreizniet
- 2.: Nietkörper
- 3.: Verriegelungsstift
- 4.: Montagerichtung
- 5.: erster Nietkanal
- 6.: zweiter Nietkanal
- 7.: Stiftaufnahmeöffnung
- 8.: Stiftaufnahmevolumen
- 9.: Wandung
- 10.: Außenfläche
- 11.: Nenndurchmesser
- 12.: erster Rastabschnitt
- 13.: zweiter Rastabschnitt
- 14.: Rastmittel
- 15.: effektiver Durchmesser
- 16.: Randbereich
- 17.: Anlagebereich
- 18.: Anlagefläche
- 19.: Verriegelungsabschnitt
- 20.: Teilungsebene
- 21.: erster Längsabschnitt
- 22.: zweiter Längsabschnitt
- 23.: erstes Wandungsprofil
- 24.: zweites Wandungsprofil
- 25.: Flügelelement
- 26.: Übergangsabschnitt
- 27.: erster Armabschnitt
- 28.: zweiter Armabschnitt
- 29.: Stegabschnitt
- 30.: erster Stegendabschnitt
- 31.: zweiter Stegendabschnitt
- 32.: erstes Teilvolumen
- 33.: zweites Teilvolumen
- 34.: Umfangsrichtung
- 35.: Umkreis
- 36.: dritter Armabschnitt
- 37.: vierter Armabschnitt
- 38.: Projektionsebene
- 39.: erste Innenkante
- 40.: dritte Innenkante
- 41.: erste Stegkante
- 42.: erstes Teilvolumenprofil
- 43.: zweite Innenkante
- 44.: vierte Innenkante
- 45.: zweite Stegkante
- 46.: zweites Teilvolumenprofil
- 47.: Quersteg
- 48.: Stegausnehmung
- 49.: erste Verriegelungszunge
- 50.: zweite Verriegelungszunge
- 51.: erster Verriegelungsabschnitt
- 52.: zweiter Verriegelungsabschnitt
- 53.: Ausklinkung
- 54.: erstes Bauteil
- 55.: zweites Bauteil
- 56.: Vormontagerastmittel
- 57.: Hilfsrastmittel
- 58.: Verfahren
- 59.: Nietherstellungsschritt
- 60.: Stiftherstellungsschritt
- 61.: Vorpositionierungsschritt
- 62.: Teilauswurfschritt
- 63.: Auswurfschritt

## Patentansprüche

1. Spreizniet (1) zum gleichzeitigen Ausbilden zumindest einer ersten Nietverbindung und einer zweiten Nietverbindung, wobei der Spreizniet (1) in einer Montagerichtung (4) durch einen der ersten Nietverbindung zuordenbaren ersten Nietkanal (5) und einen der zweiten Nietverbindung zuordenbaren zweiten Nietkanal (6) hindurchführbar ist, wobei der Spreizniet (1) einen Nietkörper (2) und einen Verriegelungsstift (3) aufweist, wobei der Nietkörper (2) eine Stiftaufnahmeöffnung (7) und ein sich in der Montagerichtung (4) von der Stiftaufnahmeöffnung (7) weg erstreckendes Stiftaufnahmevolumen (8) aufweist, dass zumindest abschnittsweise von einer Wandung (9) des Nietkörpers (2) umgriffen ist, wobei durch eine von dem Stiftaufnahmevolumen (8) weg gerichtete und senkrecht zu der Montagerichtung (4) ausgerichtete Außenfläche (10) der Wandung (9) ein Nenndurchmesser (11) des Spreizniets (1) definiert ist, wobei an dem Nietkörper (2) zumindest ein erster Rastabschnitt (12) und ein zweiter Rastabschnitt (13) ausgebildet sind, wobei die Rastabschnitte (12, 13) in der Montagerichtung (4) voneinander beabstandet sind, wobei der Nietkörper (2) in den Rastabschnitten (12, 13) jeweils zumindest ein Rastmittel (14) aufweist, das sich in radialer Richtung über die Außenfläche (10) der Wandung (9) hinaus erstreckt, sodass ein effektiver Durchmesser (15) des Spreizniets (1) im Bereich der Rastabschnitte (12, 13) größer ist als der Nenndurchmesser (11) und so in die Montagerichtung (4) weisende Randbereiche (16) der Nietkanäle (5 ,6) durch die Rastmittel (14) hintergreifbar sind, **dadurch gekennzeichnet, dass**
die Rastmittel (14) einen Anlagebereich (17) mit zumindest einer in antiradialer Richtung weisenden Anlagefläche (18) aufweisen, wobei die Rastmittel (14) des Spreizniets (1) so angeordnet und ausgerichtet sind, dass der Anlagebereich (17) in einem lastfreien Zustand nicht in das Stiftaufnahmevolumen (8) hineinragt, wobei die Rastmittel (14) derart in antiradialer Richtung verlagerbar sind, dass die jeweiligen Anlagebereiche (17) zumindest abschnittsweise in das Stiftaufnahmevolumen (8) hinein verlagerbar sind, wenn auf die Rastmittel (14) eine zumindest teilweise in antiradialer Richtung gerichtete Kraft wirkt, sodass der effektive Durchmesser (15) des Spreizniets (1) auf den Nenndurchmesser (11) verringerbar ist und der Spreizniet (1) durch die Nietkanäle (5 ,6) hindurchführbar ist, wobei das Stiftaufnahmevolumen (8) und der Verriegelungsstift (3) so aneinander angepasst sind, dass der Verriegelungsstift (3) derart in dem Stiftaufnahmevolumen (8) anordnenbar ist, dass Verriegelungsabschnitte (19, 51, 52) des Verriegelungsstifts (3) so mit den Anlageflächen (18) der Rastmittel (14) in Anlage bringbar sind, dass eine Verlagerung der Rastmittel (14) in das
Stiftaufnahmevolumen (8) hinein verhindert und so der Spreizniet (1) an den Randbereichen (16) der Nietkanäle (5, 6) festlegbar ist.

2. Spreizniet (1) nach Anspruch 1, **dadurch gekennzeichnet, dass** die Wandung (9) des Nietkörpers (2) zumindest abschnittsweise ein erstes Wandungsprofil (23) mit einem ersten Armabschnitt (27) und einem zweiten Armabschnitt (28) sowie einem Stegabschnitt (29) aufweist, wobei der Stegabschnitt (29) sich zwischen einem ersten Stegendabschnitt (30), der einem ersten Oberflächenabschnitt der Außenfläche (10) zuordenbar ist, und einem zweiten Stegendabschnitt (31), der einem zweiten Oberflächenabschnitt der Außenfläche (10) zuordenbar ist und der dem ersten Oberflächenabschnitt der Außenfläche (10) gegenüberliegt, erstreckt, wobei der Stegabschnitt (29) das Stiftaufnahmevolumen (8) zumindest abschnittsweise in ein erstes Teilvolumen (32) und ein zweites Teilvolumen (33) unterteilt, wobei sich der erste Armabschnitt (27), ausgehend von dem ersten Stegendabschnitt (30), in einer Umfangsrichtung (34) eines Umkreises (35) des Nietkörpers (2), entlang der Außenfläche (10) sowie in das erste Teilvolumen (32) hinein erstreckt, wobei sich der zweite Armabschnitt (28), ausgehend von dem zweiten Stegendabschnitt (31), in der Umfangsrichtung (34), entlang der Außenfläche (10) sowie in das zweite Teilvolumen (33) hinein erstreckt.

3. Spreizniet (1) nach einem der Ansprüche 1 oder 2, **dadurch gekennzeichnet, dass** die Wandung (9) des Nietkörpers (2) zumindest abschnittsweise ein zweites Wandungsprofil (24) mit einem dritten Armabschnitt (36) und einem vierten Armabschnitt (37) sowie dem Stegabschnitt (29) aufweist, wobei sich der dritte Armabschnitt (36), ausgehend dem ersten Stegendabschnitt (30), entgegen der Umfangsrichtung (34) des Umkreises (35) des Nietkörpers (2), entlang der Außenfläche (10) sowie in das zweite Teilvolumen (33) hinein erstreckt, wobei sich der vierte Armabschnitt (37), ausgehend von dem zweiten Stegendabschnitt (31), entgegen der Umfangsrichtung (34), entlang der Außenfläche (10) sowie in das erste Teilvolumen (32) hinein erstreckt.

4. Spreizniet (1) nach den Ansprüchen 2 und 3, **dadurch gekennzeichnet, dass** eine Projektion des ersten Teilvolumens (32) in eine senkrecht zu der Montagerichtung (4) ausgerichtete Projektionsebene (38) von einer Projektion einer an das erste Teilvolumen (32) angrenzenden ersten Innenkante (39) des ersten Armabschnitts (27), einer Projektion einer dritten Innenkante (40) des dritten Armabschnitts (36) sowie einer Projektion einer ersten Stegkante (41) des Stegabschnitts (29), die an das erste Teilvolumen (32) grenzt, vollständig umlaufen ist, sodass durch die erste Innenkante (39), die dritte Innenkante (40) und die erste Stegkante (41) ein erstes Teilvolumenprofil (42) des ersten Teilvolumens (32) definiert ist, wobei eine Projektion des zweiten Teilvolumens (33) in der Projektionsebene (38) von einer Projektion einer an das zweite Teilvolumen (33) angrenzenden zweiten Innenkante (43) des zweiten Armabschnitts (28), einer Projektion einer vierten Innenkante (44) des vierten Armabschnitts (37) sowie einer Projektion einer zweiten Stegkante (45) des Stegabschnitts (29), die an das zweite Teilvolumen (33) grenzt, vollständig umlaufen ist, sodass durch die zweite Innenkante (43), die vierte Innenkante (44) und die zweite Stegkante (45) ein zweites Teilvolumenprofil (46) des zweiten Teilvolumens (33) definiert ist.

5. Spreizniet (1) nach einem der Ansprüche 2 bis 4, **dadurch gekennzeichnet, dass** der erste Armabschnitt (27) und der zweite Armabschnitt (28) und/oder der dritte Armabschnitt (36) und der vierte Armabschnitt (37) punktsymmetrisch zueinander ausgebildet sind.

6. Spreizniet (1) nach einem der Ansprüche 2 bis 5, **dadurch gekennzeichnet, dass** die Wandung (9) des Nietkörper (2) im Bereich der Wandungsprofile (23, 24) in parallel zu dem Stegabschnitt (29) und senkrecht zu der Montagerichtung (4) ausgerichteten Werkzeugrichtungen hinterschneidungsfrei ausgebildet ist.

7. Spreizniet (1) nach einem der Ansprüche 2 bis 6, **dadurch gekennzeichnet, dass** die Wandung (9) einen durch den Stegabschnitt (29) der Wandungsprofile (23, 24) bestimmten Quersteg (47) aufweist, der sich durch das Stiftaufnahmevolumen (8) erstreckt und das Stiftaufnahmevolumen (8) in das erste Teilvolumen (32) und das zweite Teilvolumen (33) unterteilt, wobei der Verriegelungsstift (3) eine Stegausnehmung (48) aufweist, die den Verriegelungsstift (3) abschnittsweise spaltet, sodass der Verriegelungsstift (3) eine erste Verriegelungszunge (49) und eine zweite Verriegelungszunge (50) aufweist, wobei die Verriegelungszungen (49, 50) und der Quersteg (47) derart aneinander angepasst sind, dass die erste Verriegelungszunge (49) in das erste Teilvolumen (32) einführbar ist, wobei die zweite Verriegelungszunge (50) in das zweite Teilvolumen (33) einführbar ist, wobei die Verriegelungszungen (49, 50) zumindest abschnittsweise an dem Quersteg (47) anliegen und wobei die Verriegelungszungen (49, 50) die Verriegelungsabschnitte (51, 52) des Verriegelungsstifts (3) aufweisen.

8. Spreizniet (1) nach einem der Ansprüche 1 bis 7, **dadurch gekennzeichnet, dass** der Spreizniet (1) einen einstückig hergestellten Nietkörper (2) aufweist.

9. Spreizniet (1) nach einem der Ansprüche 1 bis 8, **dadurch gekennzeichnet, dass** der Verriegelungsstift (3) einen ersten Verriegelungsabschnitt (51), eine Ausklinkung (53), einen zweiten Verriegelungsabschnitt (52) sowie Vormontagerastmittel (56) aufweist, wobei die Ausklinkung (53) sich in der Montagerichtung (4) zwischen dem ersten Verriegelungsabschnitt (51) und dem zweiten Verriegelungsabschnitt (52) erstreckt, wobei eine Ausdehnung des Verriegelungsstifts (3) quer zu der Montagerichtung (4) im Bereich der Ausklinkung (53) geringer ist, als im Bereich des ersten und zweiten Verriegelungsabschnitts (51, 52), sodass durch die Ausklinkung (53) eine Verlagerung der Rastmittel (14) in das Stiftaufnahmevolumen (8) hinein ermöglicht ist, wobei der Verriegelungsstift (3) in einem Vormontagezustand des Spreizniets (1) mittels der Vormontagerastmittel (56) so in dem Stiftaufnahmevolumen (8) festgelegt ist, dass der erste Verriegelungsabschnitt (51) des Verriegelungsstifts (3) an dem ersten Rastabschnitt (12) vorbeigeführt und die Ausklinkung (53) im Bereich des ersten Rastabschnitts (12) angeordnet ist, sodass die Rastmittel (14) des ersten Rastabschnitts (12) und des zweiten Rastabschnitt (13) entriegelt sind, wobei der Spreizniet (1) durch ein vollständiges Einschieben des Verriegelungsstifts (3) in das Stiftaufnahmevolumen (8) in einen Montagezustand überführbar ist, in dem der erste Verriegelungsabschnitt (51) des Verriegelungsstifts (3) im Bereich des zweiten Rastabschnitts (13) angeordnet ist, wobei der zweite Verriegelungsabschnitt (52) im Bereich des ersten Rastabschnitts (12) angeordnet ist, wobei die Ausklinkung (53) zwischen dem ersten Rastabschnitt (12) und dem zweiten Rastabschnitt (13) angeordnet ist, sodass der erste und zweite Verriegelungsabschnitt (51, 52) in dem Montagezustand mit den Anlageflächen (18) der Rastmittel (14) im ersten und zweiten Rastabschnitt (12, 13) in Anlage gebracht sind und der Spreizniet (1) verriegelt ist.

10. Spreizniet (1) nach einem der Ansprüche 1 bis 9, **dadurch gekennzeichnet, dass** die Rastmittel (14) als in die Wandung (9) eingebrachte Rastzungen ausgebildet sind, wobei die Rastzungen rampenartig ausgebildete Rastfüße aufweisen, die sich in antiradialer Richtung von dem Nietkörper (2) weg erstrecken und durch die die Randbereiche (16) der Nietkanäle (5, 6) hintergreifbar sind.

11. Spreizniet (1) nach einem der Ansprüche 1 bis 10, **dadurch gekennzeichnet, dass** an dem Nietkörper (2) Hilfsrastmittel (57) ausgebildet sind, wobei die Hilfsrastmittel (57) unabhängig von den Rastmittel (14) sind und wobei die Hilfsrastmittel (57) so an die Nietkanäle (5, 6) angepasst sind, dass sie in Innenwandungsbereiche der Nietkanäle (5, 6) eingreifen, wenn der Spreizniet (1) bestimmungsgemäß in den Nietkanälen (5, 6) positioniert ist, sodass der Spreizniet (1) mittels der Hilfsrastmittel (57) auch dann an den Nietkanälen (5, 6) festgelegt ist, wenn er nicht in den Montagezustand überführt ist.

12. Verfahren (58) zur Herstellung eines Spreizniets (1) nach einem der Ansprüche 1 bis 11, wobei zunächst in einem Nietherstellungsschritt (59) der Nietkörper (2) hergestellt wird, wobei in einem auf den Nietherstellungsschritt (59) folgenden Stiftherstellungsschritt (60) der Verriegelungsstift (3) hergestellt wird, wobei in einem auf den Nietherstellungsschritt (59) und den Stiftherstellungsschritt (60) folgenden Vorpositionierungsschritt (61) der Verriegelungsstift (3) abschnittsweise so in den Nietkörper (2) eingeführt und an diesem festgelegt wird, dass der Spreizniet (1) nicht verriegelt ist und der Verriegelungsstift verliersicher an dem Nietkörper (2) festgelegt ist.

13. Verfahren (58) nach Anspruch 12, **dadurch gekennzeichnet, dass** der Spreizniet (1) ein Spreizniet (1) nach einem der Ansprüche 8 bis 11 ist, wobei Stiftherstellungsschritt (60) und der Nietherstellungsschritt (59) gleichzeitig, mittels eines Werkzeugs durchgeführt werden, wobei in einem auf den Stiftherstellungsschritt (60) und den Nietherstellungsschritt (59) folgenden Teilauswurfschritt (62) der Nietkörper (2) und der Verriegelungsstift (3) aus dem Werkzeug gelöst werden, wobei der Vorpositionierungsschritt (61) nach dem Teilauswurfschritt (62) mit dem gleichen Werkzeug durchgeführt wird, wie der Stiftherstellungsschritt (60) und der Nietherstellungsschritt (59), indem der Verriegelungsstift (3) mittels eines einzelnen Schiebers in den Nietkörper (2) eingeschoben wird, wobei in einem Auswurfschritt (63) der fertige Spreizniet (1) mit dem Nietkörper (2) und dem korrekt vorpositionierten Verriegelungsstift (3) ausgeworfen wird.

## Claims

1. Expanding rivet (1) for simultaneously forming at least one first rivet connection and one second rivet connection, wherein the expanding rivet (1) can be guided in a mounting direction (4) through a first rivet channel (5) that can be assigned to the first rivet connection and a second rivet channel (6) that can be assigned to the second rivet connection, wherein the expanding rivet (1) comprises a rivet body (2) and a locking pin (3), wherein the rivet body (2) comprises a pin receiving opening (7) and a pin receiving volume (8) which extends away from the pin receiving opening (7) in the mounting direction (4) and which is encompassed in portions by a wall (9) of the rivet body (2), wherein a nominal diameter (11) of the expanding rivet (1) is defined by an outer surface (10) of the wall (9) that is directed away from the pin receiving volume (8) and is oriented perpendicularly to the mounting direction (4), wherein at least one first detent portion (12) and one second detent portion (13) are formed on the rivet body (2), wherein the detent portions (12, 13) are spaced apart from one another in the mounting direction (4), wherein the rivet body (2) comprises at least one detent means (14) in each case, in the detent portions (12, 13), which detent means extends beyond the outer surface (10) of the wall (9), in the radial direction, such that an effective diameter (15) of the expanding rivet (1) in the region of the detent portions (12, 13) is larger than the nominal diameter (11) and thus the detent means (14) can engage behind edge regions (16) of the rivet channels (5, 6) facing in the mounting direction (4), **characterised in that** the detent means (14) comprise a contact region (17) having at least one contact surface (18) that faces in the anti-radial direction, wherein the detent means (14) of the expanding rivet (1) are arranged and oriented in such a way that the contact region (17) does not protrude into the pin receiving volume (8) in a load-free state, wherein the detent means (14) are displaceable in the anti-radial direction in such a way that the respective contact regions (17) can be displaced into the pin receiving volume (8), at least in portions, when a force directed at least in part in the anti-radial direction acts on the detent means (14), such that the effective diameter (15) of the expanding rivet (1) can be reduced to the nominal diameter (11) and the expanding rivet (1) can be guided through the rivet channels (5, 6), wherein the pin receiving volume (8) and the locking pin (3) are adjusted to one another in such a way that the locking pin (3) can be arranged in the pin receiving volume (8) in such a way that locking portions (19, 51, 52) of the locking pin (3) can be brought into contact with the contact surfaces (18) of the detent means (14) in such a way that a displacement of the detent means (14) into the pin receiving volume (8) is prevented and the expanding rivet (1) can thus be fixed at the edge regions (16) of the rivet channels (5, 6).

2. Expanding rivet (1) according to claim 1, **characterised in that** the wall (9) of the rivet body (2) comprises a first wall profile (23), at least in portions, having a first arm portion (27) and a second arm portion (28) as well as a rib portion (29), wherein the rib portion (29) extends between a first rib end portion (30), which can be assigned to a first surface portion of the outer surface (10), and a second rib end portion (31), which can be assigned to a second surface portion of the outer surface (10) and which is opposite the first surface portion of the outer surface (10), wherein the rib portion (29) divides the pin receiving volume (8) at least in portions into a first partial volume (32) and a second partial volume (33), wherein the first arm portion (27), proceeding from the first rib end portion (30), extends in a peripheral direction (34) of a perimeter (35) of the rivet body (2), along the outer surface (10) and into the first partial volume (32), wherein the second arm portion (31), proceeding from the second rib end portion (31), extends in a peripheral direction (34), along the outer surface (10) and into the second partial volume (33).

3. Expanding rivet (1) according to either claim 1 or claim 2, **characterised in that** the wall (9) of the rivet body (2) comprises, at least in portions, a second wall profile (24) having a third arm portion (36) and a fourth arm portion (37) as well as the rib portion (29), wherein the third arm portion (36), proceeding from the first rib end portion (30), extends counter to the peripheral direction (34) of the perimeter (35) of the rivet body (2), along the outer surface (10) and into the second partial volume (33), wherein the fourth arm portion (37), proceeding from the second rib end portion (31), extends counter to the peripheral direction (34), along the outer surface (10) and into the first partial volume (32).

4. Expanding rivet (1) according to claims 2 and 3,
**characterised in that** a projection of the first partial volume (32) in a projection plane (38) oriented perpendicularly to the mounting direction (4) is completely surrounded by a projection of a first inside edge (39) of the first arm portion (27) adjoining the first partial volume (32), a projection of a third inside edge (40) of the third arm portion (36), and a projection of a first rib edge (41) of the rib portion (29), which adjoins the first partial volume (32), such that a first partial volume profile (42) of the first partial volume (32) is defined by the first inside edge (39), the third inside edge (30) and the first rib edge (41), wherein a projection of the second partial volume (33) in the projection plane (38) is completely surrounded by a projection of a second inside edge (43) of the second arm portion (28) adjoining the second partial volume (33), a projection of a fourth inside edge (44) of the fourth arm portion (37), and a projection of a second rib edge (45) of the rib portion (29), which adjoins the second partial volume (33), such that a second partial volume profile (46) of the second partial volume (33) is defined by the second inside edge (43), the fourth inside edge (44) and the second rib edge (45).

5. Expanding rivet (1) according to any of claims 2 to 4,
**characterised in that** the first arm portion (27) and the second arm portion (28), and/or the third arm portion (36) and the fourth arm portion (37), are configured point-symmetrically with respect to one another.

6. Expanding rivet (1) according to any of claims 2 to 5,
**characterised in that** the wall (9) of the rivet body (2) is configured without undercuts, in the region of the wall profile (23, 24), in tool directions oriented in parallel with the rib portion (29) and perpendicularly to the mounting direction (4).

7. Expanding rivet (1) according to any of claims 2 to 6,
**characterised in that** the wall (9) comprises a transverse rib (47) which is determined by the rib portion (29) of the wall profiles (23, 24) and which extends through the pin receiving volume (8) and divides the pin receiving volume (8) into the first partial volume (32) and the second partial volume (33), wherein the locking pin (3) comprises a rib recess (48) which splits the locking pin (3), in portions, such that the locking pin (3) has a first locking tongue (49) and a second locking tongue (50), wherein the locking tongues (49, 50) and the transverse rib (47) are adjusted to one another in such a way that the first locking tongue (49) can be introduced into the first partial volume (32), wherein the second locking tongue (50) can be introduced into the second partial volume (33), wherein the locking tongues (49, 50) abut the transverse rib (47) at least in portions, and wherein the locking tongues (49, 50) comprise the locking portions (51, 52) of the locking pin (3).

8. Expanding rivet (1) according to any of claims 1 to 7,
**characterised in that** the expanding rivet (1) comprises a rivet body (2) that is manufactured in one piece.

9. Expanding rivet (1) according to any of claims 1 to 8,
**characterised in that** the locking pin (3) comprises a first locking portion (51), a notch (53), a second locking portion (52) and pre-mounting detent means (56), wherein the notch (53) extends in the mounting direction (4), between the first locking portion (51) and the second locking portion (52), wherein the extension of the locking pin (3) transversely to the mounting direction (4) is smaller in the region of the notch (53) than in the region of the first and second locking portion (51, 52), such that the notch (53) allows for a displacement of the detent means (14) into the pin receiving volume (8), wherein in a pre-mounting state of the expanding rivet (1) the locking pin (3) is fixed in the pin receiving volume (8) by means of the pre-mounting detent means (56) in such a way that the first locking portion (51) of the locking pin (3) is guided past the first detent portion (12) and the notch (53) is arranged in the region of the first detent portion (12), such that the detent means (14) of the first detent portion (12) and of the second detent portion (13) are unlocked, wherein the expanding rivet (1) can be transferred into a mounting state by completely pushing the locking pin (3) into the pin receiving volume (8), in which mounting state the first locking portion (51) of the locking pin (3) is arranged in the region of the second detent portion (13), wherein the second locking portion (52) is arranged in the region of the first detent portion (12), wherein the notch (53) is arranged between the first detent portion (12) and the second detent portion (13), such that the first and second locking portion (51, 52) are brought into contact, in the mounting state, with the contact surfaces (18) of the detent means (14) in the first and second detent portion (12, 13), and the expanding rivet (1) is locked.

10. Expanding rivet (1) according to any of claims 1 to 9,
**characterised in that** the detent means (14) are configured as latching tongues which are introduced into the wall (9), wherein the latching tongues comprise latching feet which are configured in a ramp-like manner and extend away from the rivet body (2) in the anti-radial direction and behind which the edge regions (16) of the rivet channels (5, 6) can engage.

11. Expanding rivet (1) according to any of claims 1 to 10,
**characterised in that** auxiliary detent means (57) are formed on the rivet body (2), wherein the auxiliary detent means (57) are independent of the detent means (15), and wherein the auxiliary detent means (57) are adjusted to the rivet channels (5, 6) in such a way that they engage in inner wall regions of the rivet channels (5, 6) when the expanding rivet (1) is positioned as intended in the rivet channels (5, 6), such that the expanding rivet (1) is fixed to the rivet channels (5, 6) by means of the auxiliary detent means (57) even if it is not transferred into the mounting state.

12. Method (58) for producing an expanding rivet (1) according to any of claims 1 to 11, wherein firstly, in a rivet production step (59), the rivet body (2) is provided, wherein in a pin production step (60) that follows the rivet production step (59) the locking pin (3) is produced, wherein in a pre-positioning step (61) that follows the rivet production step (59) and the pin production step (60) the locking pin (3) is introduced into the rivet body (2), in portions, and fixed thereon, in such a way that the expanding rivet (1) is not locked and the locking pin is fixed on the rivet body (2) in an anti-loss manner.

13. Method (58) according to claim 12, **characterised in that** the expanding rivet (1) is an expanding rivet (1) according to any of claims 8 to 11, wherein pin production step (60) and the rivet production step (59) are carried out simultaneously, by means of a tool, wherein in a partial ejection step (62) that follows the pin production step (60) and the rivet production step (59) the rivet body (2) and the locking pin (3) are released from the tool, wherein the pre-positioning step (61) is carried out after the partial ejection step (62), using the same tool as the pin production step (60) and the rivet production step (59), **in that** the locking pin (3) is pushed into the rivet body (2) by means of a single slider, wherein in an ejection step (63) the finished expanding rivet (1) with the rivet body (2) and the correctly pre-positioned locking pin (3) is ejected.

## Revendications

1. Rivet à expansion (1) pour réaliser simultanément au moins une première liaison par rivetage et une deuxième liaison par rivetage, où le rivet à expansion (1) peut être guidé dans une direction de montage (4) à travers un premier canal de rivetage (5) pouvant être associé à la première liaison par rivetage et un deuxième canal de rivetage (6) pouvant être associé à la deuxième liaison par rivetage, où le rivet à expansion (1) présente un corps de rivet (2) et une goupille de verrouillage (3), où le corps de rivet (2) présente une ouverture de réception de goupille (7) et un volume de réception de goupille (8) s'étendant dans la direction de montage (4) à partir de l'ouverture de réception de goupille (7), qui est entouré au moins par sections par une paroi (9) du corps de rivet (2), où un diamètre nominal (11) du rivet à expansion (1) est défini par une surface extérieure (10) de la paroi (9) dirigée à l'opposé du volume de réception de tige (8) et orientée perpendiculairement à la direction de montage (4), où au moins une première section d'encliquetage (12) et une deuxième section d'encliquetage (13) sont réalisées sur le corps de rivet (2), où les sections d'encliquetage (12, 13) sont espacées l'une de l'autre dans la direction de montage (4), où le corps de rivet (2) présente dans chacune des sections d'encliquetage (12, 13) au moins un moyen d'encliquetage (14) qui s'étend dans la direction radiale au-delà de la surface extérieure (10) de la paroi (9), de telle sorte qu'un diamètre effectif (15) du rivet à expansion (1) dans la zone des sections d'encliquetage (12, 13) est supérieur au diamètre nominal (11) et les zones de bord (16) des canaux de rivetage (5 ,6) orientées dans la direction de montage (4) peuvent ainsi être saisies par l'arrière par les moyens d'encliquetage (14), **caractérisé en ce que** les moyens d'encliquetage (14) présentent une zone d'appui (17) avec au moins une surface d'appui (18) orientée dans la direction anti-radiale, où les moyens d'encliquetage (14) du rivet à expansion (1) sont agencés et orientés de telle sorte que la zone d'appui (17) ne dépasse pas dans le volume de réception de goupille (8) dans un état non chargé, où les moyens d'encliquetage (14) peuvent être déplacés dans la direction anti-radiale de telle sorte que les zones d'appui respectives (17) puissent être déplacées au moins par sections dans le volume de réception de goupille (8) lorsqu'une force dirigée au moins partiellement dans la direction anti-radiale agit sur les moyens d'encliquetage (14), de telle sorte que le diamètre effectif (15) du rivet à expansion (1) peut être réduit au diamètre nominal (11) et le rivet à expansion (1) peut être guidé à travers les canaux de rivetage (5 ,6), où le volume de réception de goupille (8) et la goupille de verrouillage (3) sont adaptés l'un à l'autre de telle sorte que la goupille de verrouillage (3) peut être agencée dans le volume de réception de goupille (8) de telle sorte que les sections de verrouillage (19, 51, 52) de la goupille de verrouillage (3) puissent être amenées en appui avec les surfaces d'appui (18) des moyens d'encliquetage (14) de manière à empêcher un déplacement des moyens d'encliquetage (14) dans le volume de réception de goupille (8) et à fixer ainsi le rivet à expansion (1) au niveau des zones de bord (16) des canaux de rivetage (5, 6).

2. Rivet à expansion (1) selon la revendication 1, **caractérisé en ce que** la paroi (9) du corps de rivet (2) présente, au moins par sections, un premier profil de paroi (23) avec une première section de bras (27) et une deuxième section de bras (28) ainsi qu'une section de nervure (29), où la section de nervure (29) s'étend entre une première section d'extrémité de nervure (30), qui peut être associée à une première section de surface de la surface extérieure (10), et une section d'extrémité de nervure (31), qui peut être associée à une deuxième section de surface de la surface extérieure (10) et qui est opposée à la première section de surface de la surface extérieure (10), où la section de nervure (29) partage le volume de réception de goupille (8) au moins par sections en un premier volume partiel (32) et un deuxième volume partiel (33), où la première section de bras (27) s'étend, à partir de la première section d'extrémité de nervure (30), dans une direction circonférentielle (34) d'un cercle circonscrit (35) du corps de rivet (2) le long de la surface extérieure (10) ainsi que dans le premier volume partiel (32), où la deuxième section de bras (28) s'étend, à partir de la deuxième section d'extrémité de nervure (31), dans la direction circonférentielle (34), le long de la surface extérieure (10) ainsi que dans le deuxième volume partiel (33).

3. Rivet à expansion (1) selon l'une quelconque des revendications 1 ou 2, **caractérisé en ce que** la paroi (9) du corps de rivet (2) présente au moins par sections un deuxième profil de paroi (24) avec une troisième section de bras (36) et une quatrième section de bras (37) ainsi que la section de nervure (29), où la troisième section de bras (36) s'étend, à partir de la première section d'extrémité de nervure (30), à l'encontre de la direction circonférentielle (34) du cercle circonscrit (35) du corps de rivet (2), le long de la surface extérieure (10) ainsi que dans le deuxième volume partiel (33), où la quatrième section de bras (37) s'étend, à partir de la deuxième section d'extrémité de nervure (31), à l'encontre de la direction circonférentielle (34), le long de la surface extérieure (10) ainsi que dans le premier volume partiel (32).

4. Rivet à expansion (1) selon les revendications 2 et 3, **caractérisé en ce qu'**une projection du premier volume partiel (32) dans un plan de projection (38) orienté perpendiculairement à la direction de montage (4) est entièrement entourée par une projection d'un premier bord intérieur (39) de la première section de bras (27) adjacent au premier volume partiel (32), une projection d'un troisième bord intérieur (40) de la troisième section de bras (36) ainsi qu'une projection d'un premier bord de nervure (41) de la section de nervure (29) adjacente au premier volume partiel (32), de telle sorte que le premier bord intérieur (39), le troisième bord intérieur (40) et le premier bord de nervure (41) définissent un premier profil de volume partiel (42) du premier volume partiel (32), où une projection du deuxième volume partiel (33) dans le plan de projection (38) est entièrement entourée par une projection d'un deuxième bord intérieur (43) de la deuxième section de bras (28) adjacent au deuxième volume partiel (33), une projection d'un quatrième bord intérieur (44) de la quatrième section de bras (37) ainsi qu'une projection d'un deuxième bord de nervure (45) de la section de nervure (29) qui est adjacente au deuxième volume partiel (33), de telle sorte que le deuxième bord intérieur (43), le quatrième bord intérieur (44) et le deuxième bord de nervure (45) définissent un deuxième profil de volume partiel (46) du deuxième volume partiel (33).

5. Rivet à expansion (1) selon l'une quelconque des revendications 2 à 4, **caractérisé en ce que** la première section de bras (27) et la deuxième section de bras (28) et/ou la troisième section de bras (36) et la quatrième section de bras (37) sont réalisées avec une symétrie ponctuelle l'une par rapport à l'autre.

6. Rivet à expansion (1) selon l'une quelconque des revendications 2 à 5, **caractérisé en ce que** la paroi (9) du corps de rivet (2) est réalisée sans contre-dépouille dans la zone des profils de paroi (23, 24) dans des directions d'outil orientées parallèlement à la section de nervure (29) et perpendiculaires à la direction de montage (4).

7. Rivet à expansion (1) selon l'une quelconque des revendications 2 à 6, **caractérisé en ce que** la paroi (9) présente une nervure transversale (47) déterminée par la section de nervure (29) des profils de paroi (23, 24), qui s'étend à travers le volume de réception de goupille (8) et partage le volume de réception de goupille (8) en un premier volume partiel (32) et un deuxième volume partiel (33), où la goupille de verrouillage (3) présente un évidement de nervure (48) qui divise la goupille de verrouillage (3) par sections, de telle sorte que la goupille de verrouillage (3) présente une première languette de verrouillage (49) et une deuxième languette de verrouillage (50), où les languettes de verrouillage (49, 50) et la nervure transversale (47) sont adaptées l'une à l'autre de telle sorte que la première languette de verrouillage (49) peut être introduite dans le premier volume partiel (32), où la deuxième languette de verrouillage (50) peut être introduite dans le deuxième volume partiel (33), où les languettes de verrouillage (49, 50) s'appuient au moins par sections contre la nervure transversale (47) et où les languettes de verrouillage (49, 50) présentent les sections de verrouillage (51, 52) de la goupille de verrouillage (3).

8. Rivet à expansion (1) selon l'une quelconque des revendications 1 à 7, **caractérisé en ce que** le rivet à expansion (1) présente un corps de rivet (2) fabriqué d'un seul tenant.

9. Rivet à expansion (1) selon l'une quelconque des revendications 1 à 8, **caractérisé en ce que** la goupille de verrouillage (3) présente une première section de verrouillage (51), une encoche (53), une deuxième section de verrouillage (52) ainsi que des moyens d'encliquetage de prémontage (56), où l'encoche (53) s'étend dans la direction de montage (4) entre la première section de verrouillage (51) et la deuxième section de verrouillage (52), où une extension de la goupille de verrouillage (3) transversalement à la direction de montage (4) dans la zone de l'encoche (53) est plus faible que dans la zone des première et deuxième sections de verrouillage (51, 52), de telle sorte que l'encoche (53) permet un déplacement des moyens d'encliquetage (14) dans le volume de réception de goupille (8), où la goupille de verrouillage (3) est fixée dans le volume de réception de goupille (8) dans un état de prémontage (15) du rivet à expansion (1) au moyen des moyens d'encliquetage de prémontage (56) de telle sorte que la première section de verrouillage (51) de la goupille de verrouillage (3) passe devant la première section d'encliquetage (12) et l'encoche (53) est agencée dans la zone de la première section d'encliquetage (12), de telle sorte que les moyens d'encliquetage (14) de la première section d'encliquetage (12) et de la deuxième section d'encliquetage (13) sont déverrouillés, où le rivet à expansion (1) peut être transféré dans un état de montage par une insertion complète de la goupille de verrouillage (3) dans le volume de réception de goupille (8), dans lequel la première section de verrouillage (51) de la goupille de verrouillage (3) est agencée dans la zone de la deuxième section d'encliquetage (13), où la deuxième section de verrouillage (52) est agencée dans la zone de la première section d'encliquetage (12), où l'encoche (53) est agencée entre la première section d'encliquetage (12) et la deuxième section d'encliquetage (13), de telle sorte que les première et deuxième sections de verrouillage (51, 52) sont en contact, à l'état de montage, avec les surfaces d'appui (18) des moyens d'encliquetage (14) dans les première et deuxième sections d'encliquetage (12, 13) et le rivet à expansion (1) est verrouillé.

10. Rivet à expansion (1) selon l'une quelconque des revendications 1 à 9, **caractérisé en ce que** les moyens d'encliquetage (14) sont réalisés sous forme de languettes d'encliquetage introduites dans la paroi (9), où les languettes d'encliquetage présentent des pieds d'encliquetage réalisés à la manière de rampes qui s'étendent dans une direction anti-radiale à partir du corps de rivet (2) et par lesquels les zones de bord (16) des canaux de rivetage (5, 6) peuvent être saisies par l'arrière.

11. Rivet à expansion (1) selon l'une quelconque des revendications 1 à 10, **caractérisé en ce que** des moyens d'encliquetage auxiliaires (57) sont réalisés sur le corps de rivet (2), où les moyens d'encliquetage auxiliaires (57) sont indépendants des moyens d'encliquetage (14) et où les moyens d'encliquetage auxiliaires (57) sont adaptés aux canaux de rivetage (5, 6) de telle sorte qu'ils s'engagent dans des zones de paroi intérieure des canaux de rivetage (5, 6) lorsque le rivet à expansion (1) est positionné de manière conforme dans les canaux de rivetage (5, 6), de telle sorte que le rivet à expansion (1) est également fixé aux canaux de rivetage (5, 6) au moyen des moyens d'encliquetage auxiliaires (57) lorsqu'il n'est pas transféré dans l'état de montage.

12. Procédé (58) de fabrication d'un rivet à expansion (1) selon l'une quelconque des revendications 1 à 11, où, tout d'abord, le corps de rivet (2) est fabriqué dans une étape de fabrication de rivet (59), où la goupille de verrouillage (3) est fabriquée dans une étape de fabrication de goupille (60) suivant l'étape de fabrication de rivet (59), où la goupille de verrouillage (3) est introduite par sections dans le corps de rivet (2) et fixée à celui-ci dans une étape de pré-positionnement (61) suivant l'étape de fabrication de rivet (59) et l'étape de fabrication de goupille (60), de telle sorte que le rivet à expansion (1) n'est pas verrouillé et la goupille de verrouillage est fixée de manière imperdable au corps de rivet (2).

13. Procédé (58) selon la revendication 12, **caractérisé en ce que** le rivet à expansion (1) est un rivet à expansion (1) selon l'une quelconque des revendications 8 à 11, où l'étape de fabrication de goupille (60) et l'étape de fabrication de rivet (59) sont réalisées simultanément au moyen d'un outil, où le corps de rivet (2) et la goupille de verrouillage (3) sont détachés de l'outil dans une étape d'éjection partielle (62) suivant l'étape de fabrication de goupille (60) et l'étape de fabrication de rivet (59), où l'étape de pré-positionnement (61) est réalisée après l'étape d'éjection partielle (62) avec le même outil que l'étape de de fabrication de goupille (60) et l'étape de fabrication de rivet (59), en insérant la goupille de verrouillage (3) dans le corps de rivet (2) au moyen d'un seul poussoir, où le rivet à expansion fini (1) avec le corps de rivet (2) et la goupille de verrouillage (3) correctement prépositionnée est éjecté dans une étape d'éjection (63).
